(19) Europäisches Patentamt
European Patent Office
Office européen des brevets

(11) **EP 2 071 043 A1**

(12) **DEMANDE DE BREVET EUROPEEN**

(43) Date de publication:
**17.06.2009 Bulletin 2009/25**

(51) Int Cl.:
*C21C 1/04* *(2006.01)*   *C22B 9/05* *(2006.01)*
*C22B 9/10* *(2006.01)*   *C21C 1/08* *(2006.01)*
*C22C 33/08* *(2006.01)*

(21) Numéro de dépôt: 08392014.0

(22) Date de dépôt: **12.11.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **05.12.2007 MC 2542**

(71) Demandeur: **Cattaneo, Luca**
**98000 Monaco (MC)**

(72) Inventeur: **Cattaneo, Luca**
**98000 Monaco (MC)**

(54)   **Procédé de détersion de la fonte à l'état liquide**

(57)   L'objet de la présente invention est un procédé de fusion des fontes qui permet d'éliminer de la masse métallique liquide, au cours du cycle même de fusion, les inclusions compromettantes des crasses, en dépassant l'une des causes primaires de déchets.

Plus précisément, l'addition au bain d'un oxyde, d'un métal ou de toute façon d'un cation capable d'engendrer un oxyde à fort caractère basique a montré de répondre au but, surtout pour l'état permanent de propreté du four de coulée à pression, ainsi que de la régularité fonctionnelle de la bucula tampon. L'accroissement du niveau de réponse aux interventions pour la résolution des carbures est original, réduction qui se maintient presque inaltérée pour un espace de temps long et qui concourt à l'uniformité de la microstructure et de l'usinabilité mécanique des pieces produits.

**FIG. 6**

EP 2 071 043 A1

**Description**

L'objet de cette invention est le procédé de détersion des fontes à l'état liquide, procédé caractérisé par la capacité d'accentuer la flottation des inclusions de crasse, notoirement préjudiciables pour l'intégrité des pieces produits, ainsi que d'agrandir la versatilité du liquide élaboré, c'est-à-dire de permettre de faciles corrections analytiques, et par conséquence des modifications constitutionnelles ou structurales du fini, en répondant de telle manière aux exigences des temps resserrés et de la flexibilité opérationnelle imposées par les schémas modernes des installations à cycle intensif.

Le nombre des thèmes impliqués justifie l'intérêt permanent de la recherche pour le chapitre crasse, surtout dans le but de caractériser les liens capables de stabiliser des agrégats de masses amorphes qui sont les crasses mêmes. Mettant de coté l'attribution à des forces superficielles ou inter faciales, les développements des théories ioniques ont confirmé le caractère chimique-physique de ces liens, conclusion de relief également dans le but d'une plus récente délinéation des profils de comportements d'intérêt.

Les crasses, dans leur plus grande simplification, sont indiquées comme des silicates complexes du type $(MO)_x \cdot (SiO_2)_y$, où le terme (MO) indique un oxyde basique combiné avec la silice.

En mettant en évidence le caractère acide de cette dernière, l'indication dualiste $(MO)_x \cdot (SiO_2)_y$ semblerait en contraste avec le caractère ionique et plus approprié à une conception moléculaire. En vérité, il n'y aucune contradiction puisque la silice même, en présence d'un oxyde basique, peut absorber des anions oxygène en faisant naître un silicate selon le schéma:

$$2\ (MO) \rightarrow 2\ (M)^{2+}$$

$$2\ (O)^{2-} + 2SiO_2 \rightarrow (SiO_4)^{4-}$$

$$2(M)^{2+} + 2(O)^{2-} + SiO_2 \rightarrow 2(M)^{2+} + (SiO_4)^{4-}$$

sommaire clairement ionique bien que l'anion $(SiO_4)^{4-}$ ait une liaison stable principalement covalente. Une covalence en syntonie avec la considération que le petit rayon ionique (0,41 Å) et la charge électrique élevée (4⁻) du cation silicium le rendent trop polarisant pur subsister en forme isolée, vu que dans le cas spécifique, il tend à s'entourer de quatre anions oxygène en coordination tétraèdrale. L'effective capacité de l'oxyde MO à se dissocier et à mettre à disposition l'anion oxygène augmente avec le degré de ionisation du lien qui entrave les deux atomes dans la même molécule MO, ou mieux à l'accroissement de la différence du caractère eléctro-negative intercurrente, selon les travaux de Pauling, entre le métal M et l'oxygène. En assimilant la force F du lien examiné à l'attraction entre deux charges électriques de signe opposé placées à la distance d, une fois connue la valence chimique du cation M l'attraction entre les deux charges peut être directement déduite de la loi de Coulomb:

$$F = \frac{2ze^2}{d^2}$$

où Z inique la valence du cation. Et vu que le symbole «e» indice de la charge électronique, intervient dans tous les calculs du genre, on l'omet habituellement, parvenant à «l'attraction ione oxygène I»:

$$I = \frac{2z}{d^2}$$

Plusieurs propriétés des silicates binaires s'encadrent bien avec les indications déductibles de l'attraction I, confirmant la ligne poursuivie pour la caractérisation de la basicité des oxydes.

En simplifiant ce qui a été exposé à travers l'oxyde de baryum BaO, les termes à calculer sont:

- EC = électronégativité du cation = 0,9
- EΔ = électronegativité de l'anion = 3,5
- ΔE = EA-EC = 3,5-0,9 = 2,6

caractère ionique selon Pauling       = 82%

- RC = rayon du cation Ba       = 1,35 Å
- RA = rayon de l'anion 0       = 1,40 Å
- d = distance inter atomique       = 2,75 Å

Et la bivalence du cation baryum étant connue on obtient:

$$I = \frac{2z}{d^2} = \frac{2 \times 2}{(2,75)^2} = \frac{4}{7,5625} = 0,5289$$

valeur suffisamment basse pour confirmer un comportement basique, c'est-à-dire une nette propension à céder des anions oxygène à la silice pour créer le radical $(SiO_4)^{4-}$, tétravalence déterminée par la manifestation de liens hybrides $sp^3$ en coordination tétraédrique avec l'atome du silicium dans le centre.

L'unité de base d'où l'on peut construire le cristal tridimensionnel demeure le tétraèdre, avec un atome d'oxygène aux sommets réparti par deux tétraèdres, si bien que quand l'édifice cristallin est complet, et toutes les valences de l'oxygène saturées, on arrive à la formule stechiométrique $SiO_2$ de la silice cristalline. Dans la

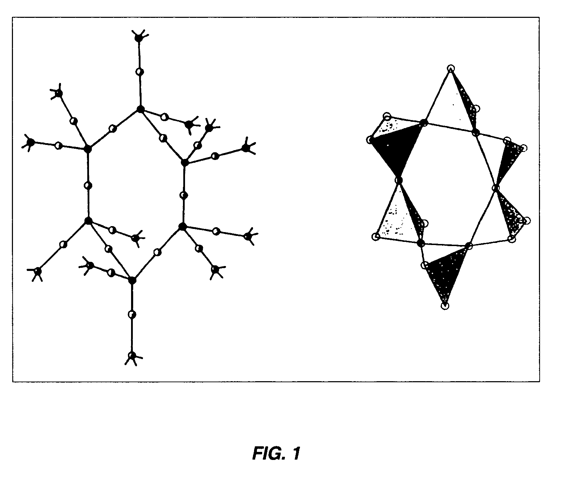

*FIG.* 1 nous trouvons la représentation spatiale de six tétraèdres chacun desquels partage l'atome d'oxygène de chaque sommet, tandis que le silicium se trouve au centre de chaque tétraèdre.

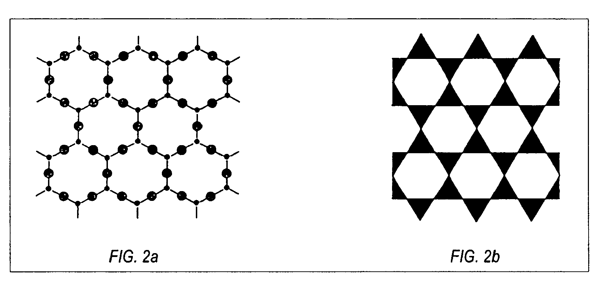

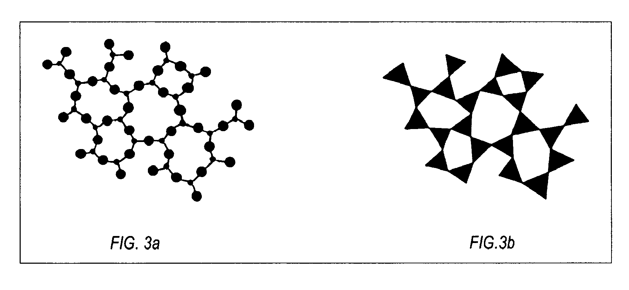

Si nous supposons l'existence d'un imaginaire silicium trivalent, telle structure tridimensionnelle peut être simplifiée et traduite dans un ensemble planar de réseaux rangés et répétitifs comme il est indiqué dans la *FIG. 2a* (schéma plan du oxyde de Si) et *FIG. 2b* (représentation avec des triangles). La régularité de cette structure peut être altérée, et les liens déformes (voir *FIG. 3a* et *FIG. 3b*) en exposant la masse siliceuse liquéfiée à un refroidissement rapide, circonstance qui amène à la formation d'une cristal de quartz: l'énergie emmagasinée dans les liens faisant l'objet de la distorsion motive la fragilité typique du cristal même.

La cristallisation de la silice peut également être contrastée par la présence d'un oxyde métallique à forte basicité, de sorte que chaque atome d'oxygène ajouté rompt le lien entre les deux tétraèdres:

$$(Si)^{3+} - O - (Si)^{3+} + (O)^{2-} \rightarrow (Si)^{3+} - (O)^{-1} + (O)^{-1} - (Si)^{3+}$$

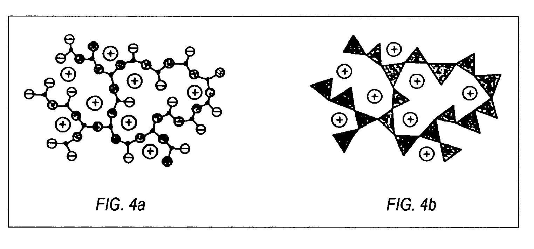

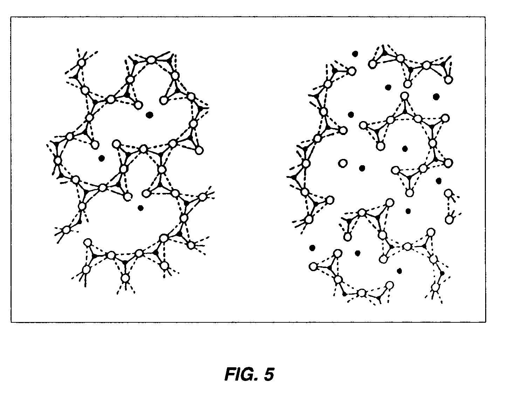

et en correspondance de chaque lien interrompu, deux atomes d'oxygène se présentent, chacun desquels avec une charge négative libre (voir *FIG. 4a* et *FIG. 4b*). En d'autres termes, la fusion de la silice avec un oxyde métallique à forte basicité bouleverse et désarticule l'ordre et la répétitivité originale de l'hypothétique réseau planar, en déterminant des concaténations dans lesquelles pas tous les atomes d'oxygène résultent saturés, et leur stabilisation suppose une coprésence de ions positifs, en assurant ainsi à l'ensemble un état électrostatique neutre (voir *FIG. 5*).

Cette conclusion met en évidence le rôle primaire de la silice présente dans le bain métallique, soit qu'elle soit due aux crasses secondaires comme les apports du recyclage de bocage non sablé ou d'érosions du pisé réfractaire du fourneau de fusion, soit aux crasses primaires reportables à l'oxydation de la charge métallique. Les principaux composants d'une fonte qui ne s'allie pas sont représentés par le fer, le silicium, le manganèse et le carbone. Au cours de la fusion les trois premiers demeurent exposés à l'oxydation, générant des crasses acides pour la présence de $SiO_2$; FeO; MnO, tandis que le carbone interagit à des températures plus élevées. La silice, somme des deux apports indiqués, se manifeste en mesure prédominante par rapport a FeO et MnO, étant plus résistante à l'action réductrice du carbone.

Le tracé du diagramme $SiO_2$-FeO confirme que les crasses riches en silice, grosso modo d'outre le 40% en poids, sont vitreux et conservent une bonne consistance même à des températures élevées.

Toutefois au fur et à mesure que la teneur en FeO grandit, leur point de fusion baisse en mesure significative, tandis que la fluidité correspondante augmente.

La coprésence de l'oxyde manganeux, c'est-à-dire la formation du ternaire $SiO_2 \cdot FeO \cdot MnO$, ne change pas de façon considérable l'état de l'ensemble, et la probabilité de s'exposer à des crasses fluides demeure très élevée.

Le caractère insidieux de ces crasses fluides est connu: invisible dans la fonte liquide, elles exaltent la probabilité de pieces défectueux, soit pour inclusions que pour des développements gazeux au cours de la solidification, en pénalisant le rendement économique du cycle productif.

La tendance insuffisante à flotter vers la surface du bain, et c'est-à-dire la basse vitesse ascensionnelle de ces phases non métalliques dispersées dans la fonte moulée, peut être raisonnablement attribuée à leur difficulté de grossir pour la coalescence en obtenant, selon la loi de Stokes, un plus grand élan vers le haut.

Le fait qu'un tel grossissement n'arrive pas malgré la prédisposition naturelle à la coalescence des phases liquides, entre autre attestée dans la désoxydation des aciers avec des alliages ternaires Fe·Si·Mn, dans le cas en question amènent à supposer l'apparition d'interférences, ou de superpositions d'effets, différents de ceux qui sont couramment considérés.

L'évidente opportunité d'expliquer tels interrogatifs nous a induits à mettre en premier plan les motivations probables qui se relient à la moderne structure chimique physique, et en particulier les possibles perspectives que la théorie des liens ioniques offrent.

Pour autant que la traction ioniques des crasses puisse être difficile, on peut soutenir avec fondement une proportionnalité inverse entre leur masse et le relatif déséquilibre des charges électrostatiques.

Il s'ensuit que deux différentes fractions ayant un tel déséquilibre, tout en étant poussées à s'unir par les forces de coalescence, leur état électrique du même signe comporte une répulsion telle à en empêcher l'union et par conséquent le grossissement. D'ici la difficulté des fractions de crasse de petites dimensions à flotter et à prévenir leur inclusion dans la fonte liquide prête pour la coulée.

La complexité de toutes ces argumentations jusqu'ici rappelées, a orienté notre travail vers une méthodologie opérative graduelle et cohérente avec les notions de structure atomique que nous avons mentionnées plusieurs fois, étant bien entendu que les chimismes impliqués, continueraient automatiquement, avec des interventions et des apports faciles, y assurant une fonte liquide finale bien détergée, c'est-à-dire le plus possible libre d'inclusions étrangères au métal.

Après un essai expérimental nous avons entrepris la modification du cycle de production des pièces en fonte à graphite lamellaire ayant l'analyse typique suivante:

$$\%C = 3{,}30\text{-}3{,}35 \quad \%Si = 1{,}55\text{-}1{,}70 \quad \%Mn = 0{,}55\text{-}0{,}60$$
$$\%S = 0{,}045\text{-}0{,}050 \quad \%P = 0{,}02\text{-}0{,}03 \quad \%Cr = 0{,}05\text{-}0{,}10$$
$$\%Sn = 0{,}04\text{-}0{,}05$$

Fonte fondu dans un four à creuset électrique de 25 tonnes à garnissage acide. La pratique très répandue prévoyait le procédé suivant: une fois que la température de 1390-1400°C a été atteinte, le bain était calmé et maintenu ainsi pour au moins dix minutes pour permettre la flottation des crasses; épandage sur ces dernières de perlite crue pour les accumuler et faciliter leur extirpation, contrôle de la trempe et de la valeur du carbone équivalent (CE), remise en mouvement du bain en veillant, s'il est nécessaire, aux corrections analytiques et enfin adition de 0,35-0,40% en poids de inoculant granulé 2-6 mm ayant comme analyse:

$$\%Zr = 5{,}0\text{-}6{,}0 \quad \%Mn = 5{,}0\text{-}6{,}0 \quad \%Ca = 1{,}0\text{-}1{,}5$$
$$\%Si = 60\text{-}65 \quad \%Al = 1{,}0\text{-}1{,}2 \quad \%Fe = \text{pour arriver à } 100\%$$

Après avoir contrôlé à nouveau que la hauteur de la trempe rentrait dans les limites prévues, on calmait définitivement le bain et on commençait la coulée.

A ce schéma nous avons apporté les modifications suivantes: après le décrassage avec l'adjuvant de la perlite, on rétablissait l'agitation du bain, et si d'après les valeurs analytiques des précédentes fusions, une progressive baisse de la teneur du soufre se produisait, quand cette valeur atteignait le 0,035-0,040% on procédait à une addition de pyrite (sulfure de fer) granulé 2,0-10,0 mm pour reporter l'élément indiqué ci-dessus au contenu optimal du 0,045-0,050%. Selon l'expérience acquise d'après un essai spécifique, dans le domaine de cet intervalle on arrivait à une amélioration considérable du degré d'efficacité du traitement inoculant successif. Non seulement la conduction de ce dernier traitement est innovatrice et l'ampleur de son action de qualifier les différents paramètres absolument originale, mais également le fait de contraster la vitesse de dégradation des améliorations encouragées, en dépassant les étroitesses temporelles connues comme «effet évanouissement».

Après la sulfuration mentionnée et si les ultérieures mises au point analytiques du bain étaient nécessaires, on additionnait au liquide en mouvement le 0,50% d'un alliage granulé 2,0-10,0 mm ayant une constitution typique:

$$La = 2{,}25\% \quad Ca = 1{,}60\% \quad Ba = 12{,}40\% \quad Al = 1{,}55\%$$
$$Si = 64{,}8\% \quad Fe = \text{pour arriver à } 100\%$$

A ce point, l'agitation du bain s'intensifiait en augmentant graduellement la puissance du four jusqu'à atteindre le maximum possible. Au fur et à mesure que la puissance distribuée augmentait, l'agitation de la masse liquide s'intensifiait, condition maximum maintenue pour dix minutes environ.

En rétablissant l'état de calme, on observait le début d'une flottation de crasse de plus en plus consistante, de même importance ou supérieure au décrassage précédent: un résultat prévu, mais certainement plutôt en termes quantitatifs plus modestes. Le thème conducteur a été celui d'expérimenter si à l'intérieur du four à induction, où l'agitation du métal suit des directions en part centrifuges et en part centripètes, pouvait justifier de possibles contacts plus amples et tels à dépasser les forces de répulsion qui limitaient le grossissement des crasses plus réduites, et de permettre donc une profonde détersion de la fonte liquide. Un but non seulement atteint, mais d'où il a été possible d'acquérir des sujets pour d'ultérieurs progrès.

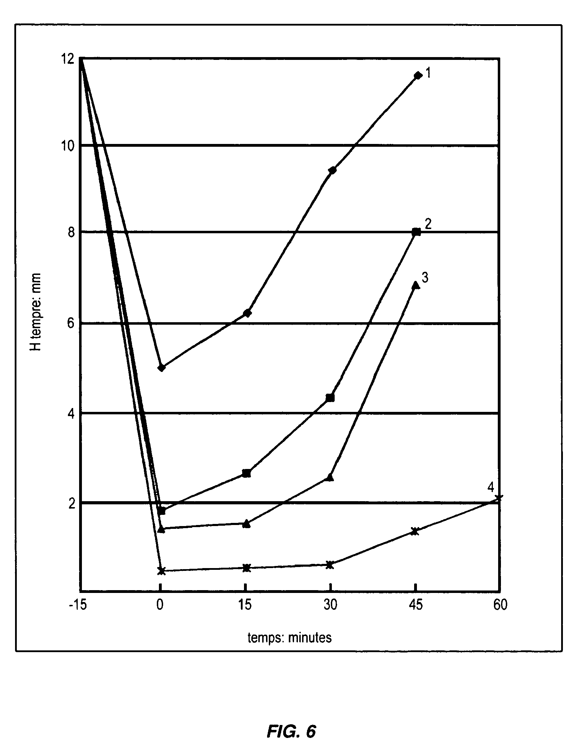

Il est connu que la permanence en phase d'attente d'un bain de fonte inoculée comporte une réduction des germes d'où s'ensuivent des augmentations imprévisibles de la trempe c'est-à-dire de la tendance à la solidification blanche en réduisant ou annulant les bénéfices de l'inoculation; le fait que la fonte élaborée selon la nouvelle méthodologie permette le maintien des effets de l'inoculation pour une longue période de temps, d'entité jamais enregistrée, c'est-à-dire une dégradation de l'état nuclée très lent et facile à réactiver, a une importance particulière (voir *FIG. 6* pour la comparaison temps de fading de l'inoculation par rapport à la fonte essuyée, où 1 est la fonte inoculée avec 0,4% d'inoculant à bas Ba; 2 est la fonte inoculée avec 0,4% d'inoculant Mn-Zr; 3 est la fonte inoculée avec 0,4% d'inoculant Mn-Ba; 4 est la fonte essuyée et inoculée avec 0,5% inoculant La-Ba).

Donner une explication exhaustive à ces résultats pratiques désormais consolidés à travers notre expérimentation longue et spécifique n'est pas facile mais certainement justifiée par d'ultérieurs approfondissements conduits à tel but.

Par contre, reconnaître le rôle primaire des crasses est définitif, en syntonie avec les positions acquises dans la matière des aciers, même si avec des modalités et des finalités différentes.

La découverte, bien que réduite de calcium et de baryum dans les mêmes crasses, permet d'exprimer l'hypothèse d'une promotion de chimismes particuliers typiques du procédé en examen, et auxquels nous pouvons reconnaître une probable base théorique. En effet, la présence possible de ions $^{3+}$(Si) - (O)$^{1-}$ justifie un enchaînement de type $^{3+}$(Si) - O - M - O - (Si)$^{+3}$, où M indique un ion bivalent comme peut l'être le calcium ou le baryum.

Cependant, quelle que puisse être la formulation des éventuels avancements de la matière, notre interprétation a déjà trouvé de grands supports dans l'activité quotidienne où la nouvelle méthodologie s'étend désormais à toute la gamme productive articulée des fontes lamellaires, aux fontes sphéroïdales et vermiculaires. Le schéma suivant des propriétés mécaniques relatives à la fonte grise où nous avons auparavant indiqué l'analyse typique, illustre les résultats obtenus, qui naturellement accompagnent les résultats économiques:

| Procédé de production: | Résistance à la traction: | |
|---|---|---|
| | N/mm$^2$ | moyenne |
| Inoculation traditionnelle | = 273 | |
| | = 270 | 214.$^{33}$ |
| | = 268 | |
| Inoculation traditionnelle et rappel dans la moule | = 236 | |
| | = 221 | 270.$^{33}$ |
| | = 186 | |
| Nouvelle méthodologie avec rappel dans la moule | = 302 | |
| | = 298 | 297 |
| | = 291 | |
| Nouvelle méthodologie sans rappel dans la moule | = 296 | |
| | = 289 | 291 |
| | = 288 | |

On peut également poursuivre des avancements encore plus significatifs dans la gamme des fontes spéciaux quelle que soit la typologie de la phase graphitique, où le rôle d'un équilibre conforme du binôme qualité et économie apparaît comme un facteur de contraste élevé. L'exploitation du lanthane et des éléments lanthanides ou des terres rares, comme le cérium et didyme (néodyme+praséodyme) est typique, additions qui permettent des économies sans compromette le comportement en phase d'exercice.

Les avantages considérables de leur application dans les moulages à alternances de passages rapides d'un régime dynamique à un état statique, sont très importants avec la conversion conséquente de l'énergie cinétique en énergie thermique. On comprend facilement le rôle déterminant de l'état micro structurel des moulages exposés à de telles conditions opératives qui, au-delà des présences qui rendent fragiles ou pour des raisons averses à une normale évolution de leur solidification, est conditionnée par un stress thermique qui, peut se traduire s'il se répète en un crack à chaud. Par conséquent, l'importance d'assurer au pieces la conductibilité thermique maximum, caractéristique que l'on peut poursuivre avec une augmentation de la quantité et une amélioration de la typologie avec laquelle la phase graphitique est présente dans sa structure.

Les travaux de Hessenbruck et de Mond Nichel ont mis en évidence que la résistance à la chaleur des fontes au nikel-cromo résulte directement proportionnelle au rayon atomique de l'élément additionné et à son affinité pour l'oxygène. Des recherches spécifiques dans le domaine des aciers spéciaux sont arrivées à des conclusions analogues, ce qui nous a induits à supposer que la même direction pouvait motiver d'ultérieurs avancements dans notre recherche. Le lanthane et le cérium sont deux éléments à rayon atomique élevé (La = 1,87 Å ; Ce = 1,81 Å), avides d'oxygène et disponibles comme des ferroalliage. Avec le 0,8% d'un mélange de ces alliages, correspondant à un contenu dans le rapport de 30% de lanthane et de 70% de cérium, nous avons inoculé la fonte, précédemment décrassée d'où à la lettre *A* du le schéma suivant:

| % | C | Si | Mn | P | S | La | Ce |
|---|------|------|------|------|------|-------|------|
| *A* | 3,24 | 2,06 | 0,68 | 0,03 | 0,04 | // | // |
| *B* | idem | idem | idem | idem | idem | 0,008 | 0,03 |

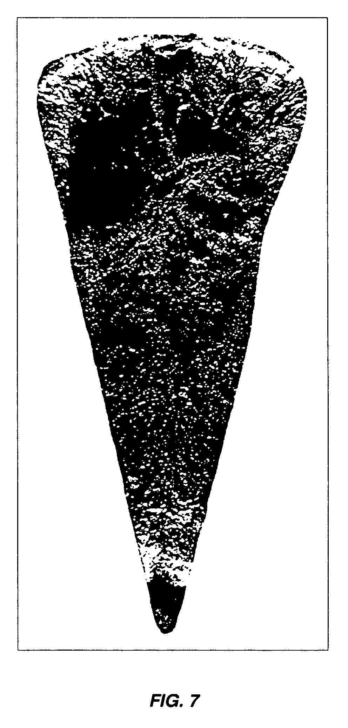

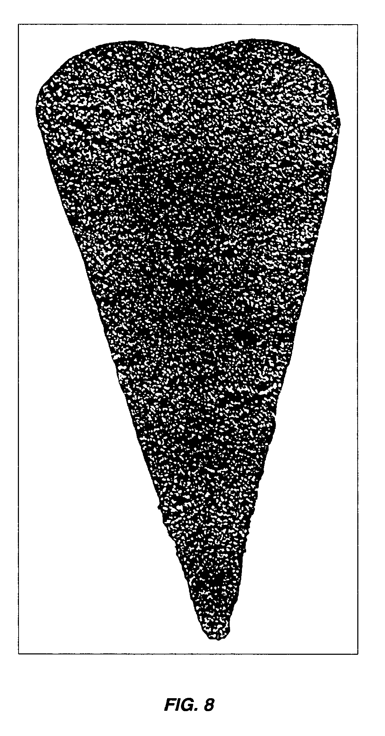

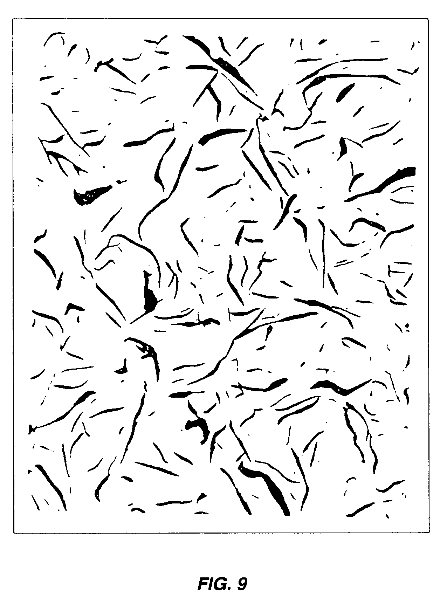

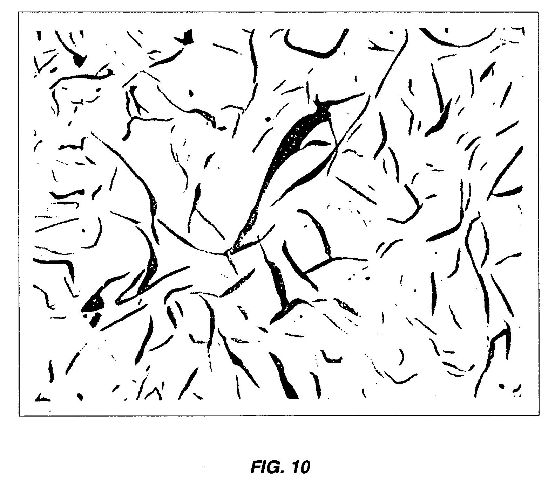

En correspondance des teneurs restantes indiquées dans la ligne *B*, l'amélioration était déjà perceptible par fracture de l'éprouvette la trempe (voir *FIG. 7* pour trempe fonte *A* et *FIG. 8* pour trempe fonte *B*) et successivement confirmé par l'examen micrographique (*FIG. 9* de la fonte *A* et *FIG. 10* de la fonte *B*, tous les deux à 100x).

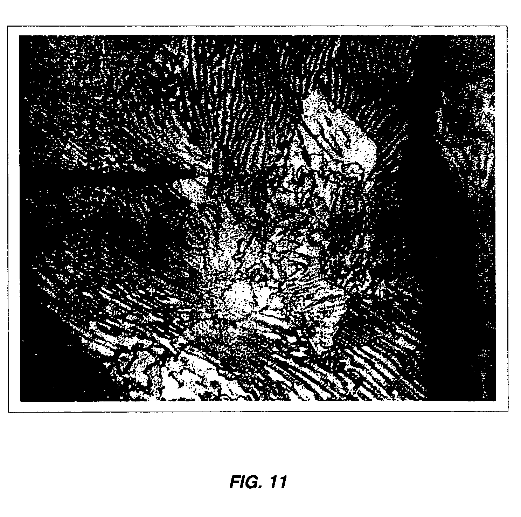

Ces résultats sont en syntonie avec nos travaux précédents dans lesquels on soulignait la multiplicité des répercussions positives dues à la présence d'éléments des terres rares. La *FIG. 11* (micrographie 1000x) met en évidence la matrice de perlite de la fonte *B* après l'attaque au nital.

Avec la même fonte A nous avons préparé deux éprouvettes unifiées par la mesure de résistance à la traction, et quatre avec la fonte B: ces dernières, placées dans une moufle à 600°C et maintenus deux pour cinq minutes et deux pour vingt minutes, après refroidissement en plein air jusqu'à la température ambiante, les valeurs respectives de la traction par rapport à l'éprouvette A, ont indiqué les accroissements suivants:

- éprouvettes après une permanence de 5 minutes à 600°C = 0,32 N/mm$^2$
- éprouvettes après une permanence de 20 minutes à 600°C = 0,68 N/mm$^2$

Tout en lisant ces résultats en termes indicatifs, on peut soutenir que, au moins dans limites expérimentées, le lanthane et le cérium ont comporté une amélioration des propriétés à chaud. Cette interprétation est cohérente avec les capacités des lanthanides, et en particulier du cérium, de neutraliser les éléments secondaires ou de oligo éléments notoirement négatifs présents dans les fontes. Un autre principe valable, est celui de retenir qu' un excès de cérium, toujours dans l'ordre de présence indiqué, puisse en même temps contribuer à l'amélioration des caractéristiques d'ordre mécanique. La capacité du cérium d'annuler les dégradations obtenues par les présences susdites adversatives, est amplement confirmée, et des supports également au profit d'une possible amélioration des caractéristiques technologiques ne manquent pas, tout en reconnaissant, grâce à des recherches spécifiques dans le domaine de l'automobile, les difficultés liées à une correcte posologie et à la nécessité conséquente de neutraliser d'éventuels excès. Il apparaît ensuit superflu de rappeler que l'ensemble des bénéfices décrits ne doit pas être disjoint du rôle primaire de l'état de détersion de la fonte liquide du départ.

**Revendications**

1. Procédé de détersion des fontes à l'état liquide **caractérisé par** la capacité non seulement de déstructurer les agrégations amorphes de crasses dispersées dans la masse métallique, mais aussi d'accentuer la flottation à la surface du bain des fractions désagrégées, de façon a être facilement extirpables, en arrivant de conséquence à une fonte liquide finale sans inclusions non métalliques.

2. Procédé objet de la revendication précédente **caractérisée** du fait que la déstructuration de l'agrégation de crasses arrive dans le four de fusion, avant la piquée, et obtenu par l'addition au bain d'un ou de plus d'oxydes à forte basicité; ou un métal, un alliage ou un mélange d'alliages ou un composé chimique où son oxydation, décomposition ou autre réaction chimique forme un ou plus oxydes métaux à forte basicité.

3. Procédé objet des revendications précédentes **caractérisé** du fait que la l'alliage, ou mélange d'alliages, utilisé contienne deux ou plus éléments chimiques:

    aluminium = de 1,0 au 7%
    baryum = du 2,0 au 15%
    calcium = du 0,5 au 7%
    lanthane = du 0,5 au 5%

terres rares comprises du N° atomique 58 (cérium) au N° atomique 60 (néodyme) = de 0,01 au 2,0% pourcentages indiqués en poids.

4. Procédé objet de toutes les revendications précédentes **caractérisé** du fait que la présence dans le bain de fonte détergée de deux ou plus d'éléments chimiques énumérés dans la *revendication N°3,* puisse résoudre les carbures éventuellement présents en réduisant de conséquence la trempe et prolonger dans le temps la permanence de cette réduction. Le degré de réponse de l'inoculant peut être exalté par une mise au point préventive ou contemporaine de la teneur en soufre de la fonte, possiblement dans les limites de 0,035-0,065% en poids grâce à un sulfure synthétique ou un minéral sulfureux.

5. Procédé objet de toutes les revendications précédentes **caractérisé** du fait que la capacité de prolonger dans le temps une trempe réduite facilite la concordance des temps des cycles de production intensifs, et en particulier l'état de propreté et la fonctionnalité opérative de la bucula tampon des fours de coulée à pression ou similaires.

6. Procédé objet de toutes les revendications précédentes **caractérisé** du fait que l'addition de cérium à la fonte, individuellement ou conjointement à d'autres éléments du groupe des terres rares améliore le comportement à chaud de la fonte détergée et ainsi dit, des pieces produits avec elle, qui peut être en voie exemplifiée mais non pas limitative, la résistance au stress thermique qui en dérive de la conversion de l'énergie cinétique en énergie statique.

7. Procédé objet de toutes les revendications précédentes **caractérisé** du fait que les opérations susdites ont lieu, après avoir coulé l'alliage du four de fusion, dans un récipient où une bonne agitation du bain avec de l'azote ou un autre gaz inerte soit réalisable, ou bien à travers des mouvements induits par des champs magnétiques.

8. Pieces de fonte, n'importe qu'elle soit leur destination, selon une ou plus des revendications susdites.

*FIG. 1*

FIG. 2a

FIG. 2b

FIG. 3a                    FIG.3b

*FIG. 4a*          *FIG. 4b*

FIG. 5

FIG. 6

FIG. 7

FIG. 8

FIG. 9

**FIG. 10**

FIG. 11

Europäisches
Patentamt

European
Patent Office

Office européen
des brevets

# RAPPORT DE RECHERCHE EUROPEENNE

Numéro de la demande

EP 08 39 2014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 135 920 A (BARBAKADZE DZHONDO F ET AL) 23 janvier 1979 (1979-01-23) * colonne 1, ligne 44 - ligne 49; exemples 1-3 * ----- | 1-8 | INV. C21C1/04 C22B9/05 C22B9/10 C21C1/08 C22C33/08 |
| X | US 4 874 576 A (REIFFERSCHEID KARL J [DE]) 17 octobre 1989 (1989-10-17) * colonne 1, ligne 55 - colonne 4, ligne 5; exemples 1-3 * ----- | 1-8 | |
| X | SU 539 682 A1 (DONETS FERR METAL) 25 décembre 1976 (1976-12-25) * revendication 1 * ----- | 1-8 | |
| X | SU 1 497 256 A1 (INST LITYA AN USSR [SU]) 30 juillet 1989 (1989-07-30) * abrégé; tableau 1 * ----- | 1-8 | |
| X | SU 1 222 705 A1 (BRUSS POLT I [SU]; TUL PT I KOMBAJNOSTROENIYA [SU]) 7 avril 1986 (1986-04-07) * colonne 1, ligne 19 - colonne 2, ligne 23 * ----- | 1-8 | DOMAINES TECHNIQUES RECHERCHES (IPC) C21C C22B C22C |
| X | RU 2 192 479 C1 (OOO NPP T) 10 novembre 2002 (2002-11-10) * abrégé; revendication 1; tableau 1 * ----- | 1-8 | |
| X | US 3 467 167 A (MAHIN WILLIAM E) 16 septembre 1969 (1969-09-16) * colonne 1, ligne 29 - colonne 2, ligne 54 * ----- -/-- | 1-8 | |

Le présent rapport a été établi pour toutes les revendications

| Lieu de la recherche | Date d'achèvement de la recherche | Examinateur |
|---|---|---|
| Munich | 13 mars 2009 | Juhart, Matjaz |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    ............................................................................

& : membre de la même famille, document correspondant

EPO FORM 1503 03.82 (P04C02)

**Europäisches Patentamt**
**European Patent Office**
**Office européen des brevets**

## RAPPORT DE RECHERCHE EUROPEENNE

Numéro de la demande

EP 08 39 2014

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SCHEISE M: "Nichtmetallische Einschluesse in Gusseisen mit Kugelgraphit" GIESSEREITECHNIK, LEIPZIG, DE, vol. 14, no. 2, 1 février 1968 (1968-02-01), pages 49-55, XP009113539 ISSN: 0016-9803 * page 52 - page 54 * ----- | 1-8 | |
| X | JP 63 180344 A (MITSUBISHI HEAVY IND LTD) 25 juillet 1988 (1988-07-25) Patent Abstracts of Japan ----- | 1,7,8 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 13 mars 2009 | Juhart, Matjaz |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 39 2014

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-03-2009

| Document brevet cité au rapport de recherche | | Date de publication | Membre(s) de la famille de brevet(s) | | Date de publication |
|---|---|---|---|---|---|
| US 4135920 | A | 23-01-1979 | AUCUN | | |
| US 4874576 | A | 17-10-1989 | DE EP | 3801917 A1 0325810 A1 | 03-08-1989 02-08-1989 |
| SU 539682 | A1 | 25-12-1976 | AUCUN | | |
| SU 1497256 | A1 | 30-07-1989 | AUCUN | | |
| SU 1222705 | A1 | 07-04-1986 | AUCUN | | |
| RU 2192479 | C1 | 10-11-2002 | AUCUN | | |
| US 3467167 | A | 16-09-1969 | AUCUN | | |
| JP 63180344 | A | 25-07-1988 | AUCUN | | |

EPO FORM P0460

Pour tout renseignement concernant cette annexe : voir Journal Officiel de l'Office européen des brevets, No.12/82